# EUROPEAN PATENT SPECIFICATION

(11) **EP 3 151 117 B1**
(45) Date of publication and mention of the grant of the patent: **21.10.2020**
(21) Application number: 16184983.1
(22) Date of filing: 19.08.2016
(51) Int. Cl.: G06F 21/62, G06F 9/44, G06F 3/0481, H04M 1/67, H04W 52/02, G06F 9/451

(54) **METHOD AND DEVICE FOR DELAYING INFORMATION BROADCASTING**
VERFAHREN UND VORRICHTUNG ZUR VERZÖGERUNG VON INFORMATIONSSENDUNGEN
PROCÉDÉ ET DISPOSITIF POUR RETARDER LA DIFFUSION D'INFORMATIONS

(30) Priority: 30.09.2015 CN 201510641838
(43) Date of publication of application: 05.04.2017
(73) Proprietor: Xiaomi Inc., Beijing 100085 (CN)
(72) Inventor: LIU, Ren, Haidian District, Beijing 100085 (CN); YAN, Hao, Haidian District, Beijing 100085 (CN); ZHANG, Jianchun, Haidian District, Beijing 100085 (CN)
(74) Representative: Kudlek, Franz Thomas

(56) References cited:
- EP-A1- 2 891 969
- WO-A1-2015/131685
- CN-A- 103 024 186
- CN-A- 104 915 123
- US-A1- 2014 366 041

## Description

### TECHNICAL FIELD

The present disclosure generally relates to the technical field of network communications, and more particularly, to a method and device for delaying information broadcasting.

### BACKGROUND

With continuous development of network communication technologies, smart phones are widely applied. In related arts, after a screen of a smart phone is turned on and the smart phone enters into a lock screen interface, various application programs in the smart phone will receive notification information broadcast by an operating system of the smart phone, and a series of application services will be triggered according to the received notification information, for example, updating application data, and the like. However, if the screen of the smart phone is turned on, and then off even without unlocking the screen, the series of application services triggered by system broadcasting are not of any use, and the power of the smart phone is wasted.

US 2014/366041 A1 discloses a method including receiving event data at a first process running on a mobile device, receiving event registration data from a second process running on the mobile device, the event registration data identifying one or more events for triggering an invocation of the second process, where the second process is suspended or terminated after the event registration data is received, determining, by the first process, that the one or more events have occurred based on the event data, and invoking the second process of the mobile device. A similar method is known from CN 103024186 A.

### SUMMARY

The invention is defined in the independent claims. Advantageous features are described in the dependent claims.

In order to address the problems existing in related arts, the present disclosure provides a method and device for delaying information broadcasting.

According to a first aspect of of the present invention , there is provided a method for delaying information broadcasting, applied in a terminal and including:
detecting a screen-brightening event;
when the screen-brightening event is detected, and a current interface is a lock screen interface, intercepting notification information broadcast by an operating system; and
when switching from the lock screen interface into an interface after unlocking is detected, sending the intercepted notification information to respective application programs.

Preferably, the method further includes:
when the screen-brightening event is detected and the current interface is not the lock screen interface, sending the notification information broadcast by the operating system to the respective application programs.

Preferably, the detecting the screen-brightening event includes:
detecting a screen-brightening operation for brightening a screen of the terminal by a user; and
when the screen-brightening operation is detected, and the screen of the terminal is in a screen-brightening state, determining the screen-brightening operation as the screen-brightening event.

Preferably, the notification information includes a screen-brightening notification. Preferably, after intercepting the notification information broadcast by the operating system, the method further includes:
storing the intercepted notification information in a buffer.

Preferably, when switching from the lock screen interface into the interface after unlocking is detected, sending the intercepted notification information to respective application programs, includes:
when the switching from the lock screen interface into the interface after unlocking is detected, sending the notification information stored in the buffer to the respective application programs.

Preferably, the method further includes:
when the switching from the lock screen interface into the interface after unlocking is not detected within a preset time, deleting the notification information stored in the buffer.

According to a second aspect of the present invention, there is provided a device for delaying information broadcasting, applied in a terminal and including:
a detection module configured to detect a screen-brightening event;
an interception module configured to, when the screen-brightening event is detected by the detection module, and a current interface is a lock screen interface, intercept notification information broadcast by an operating system; and
a first sending module configured to, when switching from the lock screen interface into an interface after unlocking is detected, send the intercepted notification information to respective application programs.

Preferably, the device further includes:
a second sending module configured to, when the screen-brightening event is detected by the detection module and the current interface is not the lock screen interface, send the notification information broadcast by the operating system to the respective application programs.

Preferably, the detection module includes:
a detection submodule configured to detect a screen-brightening operation for brightening a screen of the terminal by a user; and
a screen-brightening event determination submodule configured to, when the screen-brightening operation is detected, and the screen of the terminal is in a screen-brightening state, determine the screen-brightening operation as the screen-brightening event.

Preferably, the notification information includes a screen-brightening notification. Preferably, the device further includes:
a buffer module configured to, after the notification information broadcast by the operating system is intercepted, store the intercepted notification information in a buffer.

Preferably, the sending module includes:
a sending submodule configured to, when the switching from the lock screen interface into the interface after unlocking is detected, send the notification information stored in the buffer to the respective application programs.

Further, the device preferably further includes:
a deletion module configured to, when the switching from the lock screen interface into the interface after unlocking is not detected within a preset time, delete the notification information stored in the buffer.

According to a third aspect of the present invention, there is provided a device for delaying information broadcasting, applied in a terminal and including:
a processor; and
a memory for storing instructions executable by the processor;
wherein the processor is configured to:
   detect a screen-brightening event;
   when the screen-brightening event is detected, and a current interface is a lock screen interface, intercept notification information broadcast by an operating system; and when switching from the lock screen interface into an interface after unlocking is detected, sending the intercepted notification information to respective application programs. According to a fourth aspect of present invention, there is provided a computer program, which when executing on a processor, performs a method according to the first aspect.

The technical solutions provided by embodiments of the present disclosure have the following advantageous effects:
In the present disclosure, a terminal detects a screen-brightening event; when the screen-brightening event is detected, and a current interface is a lock screen interface, the terminal intercepts notification information broadcast by an operating system; and when switching from the lock screen interface into an interface after unlocking is detected, the terminal sends the intercepted notification information to respective application programs. In this way, when the terminal is in the lock screen state, the terminal postpones the sending of the broadcast information, and thereby running of services of respective application programs triggered by the broadcast information when the terminal is in the screen lock state is avoided.

Thus, the broadcast information can trigger running of services only after the terminal is unlocked, and thereby the power consumption is optimized.

Further, in the present disclosure, after the screen of the terminal is brightened, if the terminal is in a lock screen interface, the notification information is intercepted, and if the terminal is not in the lock screen interface, the notification information is not intercepted. Thus, the flexibility for delaying information broadcasting is enhanced and the power consumption of the terminal is reduced.

In the present disclosure, the terminal can store the intercepted notification information in a buffer, and delete the stored notification information in the buffer when switching from the lock screen interface into an interface after unlocking is not detected within a preset time. Thus, resource wastes because a user turns on the screen many times but does not unlock the screen can be avoided.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for delaying information broadcasting according to an exemplary embodiment of the present disclosure.
Fig. 2 is a flowchart showing another method for delaying information broadcasting according to an exemplary embodiment of the present disclosure.
Fig. 3 is a schematic diagram showing an application scenario of a method for delaying information broadcasting according to an exemplary embodiment of the present disclosure.
Fig. 4 is a block diagram showing a device for delaying information broadcasting according to an exemplary embodiment of the present disclosure.
Fig. 5 is a block diagram showing another device for delaying information broadcasting according to an exemplary embodiment of the present disclosure.
Fig. 6 is a block diagram showing another device for delaying information broadcasting according to an exemplary embodiment of the present disclosure.
Fig. 7 is a block diagram showing another device for delaying information broadcasting according to an exemplary embodiment of the present disclosure.
Fig. 8 is a block diagram showing another device for delaying information broadcasting according to an exemplary embodiment of the present disclosure.
Fig. 9 is a block diagram showing another device for delaying information broadcasting according to an exemplary embodiment of the present disclosure.
Fig. 10 is a block diagram showing a structure applicable in a device for delaying information broadcasting according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

The terminology used in the description of the disclosure herein is for the purpose of describing particular examples only and is not intended to be limiting of the disclosure. As used in the description of the disclosure and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items.

It shall be appreciated that although the present disclosure uses terminologies "first", "second", and "third" and the like to describe various information, the information shall not be limited by these terminologies. Using these terminologies is only for distinguishing information of the same type. For example, without departing from the scope of the present disclosure, the first information may be referred to as the second information, and similarly, the second information may be referred to as the first information. Depending on the context, the terminology "if' used herein may be interpreted as "when" or "in response to determining that...".

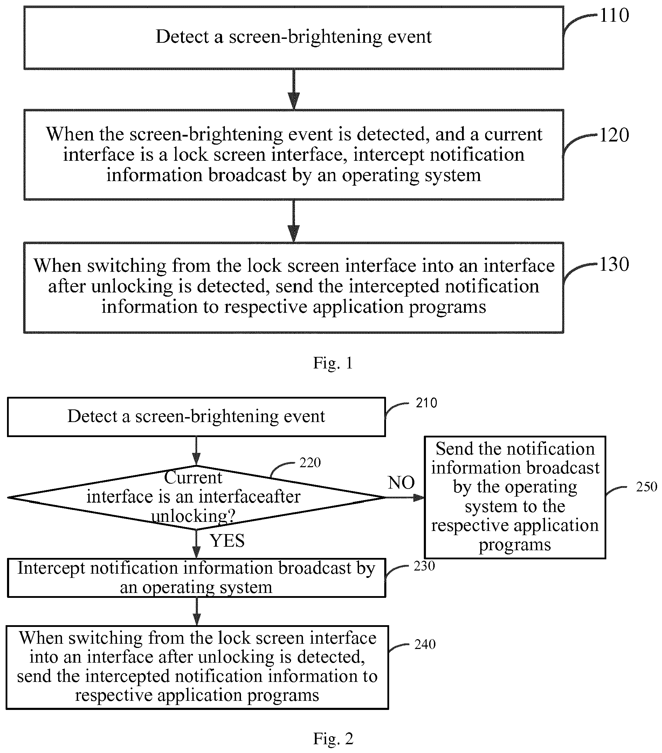

Fig. 1 is a flowchart showing a method for delaying information broadcasting according to an exemplary embodiment of the present disclosure. The method may be applied in a terminal and include the following steps.

In step 110, a screen-brightening event is detected.

The terminal in the embodiments of the present disclosure may be any smart terminal having a network accessing function, for example a mobile phone, a tablet computer, a Personal Digital Assistant (PDA), a Personal Computer (PC), and the like. The terminal may access a router via a wireless local area network and thereby accesses a serve on a public network via the router.

In an embodiment, step 110 may include:
detecting a screen-brightening operation for brightening a screen of the terminal by a user; and
when the screen-brightening operation is detected, and the screen of the terminal is in a screen-brightening state, determining the screen-brightening operation as the screen-brightening event.

For example, the terminal is a smart phone, and a user may press a preset key to brighten the screen of the smart phone. When the smart phone detects that the screen switches from a black screen to a bright screen, it is indicated that the screen-brightening event is detected.

In step 120, when the screen-brightening event is detected, and a current interface is a lock screen interface, notification information broadcast by an operating system is intercepted.

In embodiments of the present disclosure, after the screen of the terminal is brightened, if the user sets a lock screen, the terminal enters into a lock screen interface. In related arts, after the screen of the terminal is brightened, and the terminal enters into a lock screen interface, respective application programs in the terminal will receive notification information broadcast by an operating system, and a series of application services will be triggered by the received notification information. If the screen of the terminal is brightened, and then off even without unlocking the screen, the series of application services triggered by system broadcasting are not of any use, and further the power of the smart phone is wasted.

In order to reduce and optimize the power consumption of the terminal, in the embodiments of the present disclosure, when the terminal detects a screen-brightening event and enters into a lock screen interface, the terminal intercepts notification information broadcast by an operating system so that the respective application programs in the terminal does not need to receive the system broadcast under the lock screen state. Thus, triggering of series of application services by the system broadcast is avoided.

Further, the notification information broadcast by the operating system may include various notification information for representing current states of the system, for example, a screen-brightening notification.

In step 130, when switching from the lock screen interface into an interface after unlocking is detected, the intercepted notification information is sent to respective application programs.

In embodiments of the present disclosure, after the terminal is unlocked, the notification information intercepted when the terminal is in the lock screen state is sent to various application programs so that the applications programs can trigger a series of application services only after the terminal is unlocked.

It can be seen from the above embodiments that a terminal detects a screen-brightening event; when the screen-brightening event is detected, and a current interface is a lock screen interface, the terminal intercepts notification information broadcast by an operating system; and when switching from the lock screen interface into an interface after unlocking is detected, the terminal sends the intercepted notification information to respective application programs. In this way, when the terminal is in the lock screen state, the terminal postpones the sending of the broadcast information, and thereby running of services of respective application programs triggered by the broadcast information when the terminal is in the screen lock state is avoided. Thus, the broadcast information can trigger running of services only after the terminal is unlocked, and thereby the power is optimized.

Fig. 2 is a flowchart showing another method for delaying information broadcasting according to an exemplary embodiment. The method may be applied in a terminal and include the following steps.

In step 210, a screen-brightening event is detected.

In step 220, whether a current interface is an interface after unlocking is determined. If the current interface is the interface after unlocking, step 230 is performed. If the current interface is not the interface after unlocking, step 250 is performed.

In step 230, the notification information broadcast by an operating system is intercepted.

In step 240, when switching from the lock screen interface into an interface after unlocking is detected, the intercepted notification information is sent to respective application programs. The flowchart ends.

In step 250, the notification information broadcast by the operating system is sent to the respective application programs. The flowchart ends.

In embodiments of the present disclosure, after the screen of the terminal is brightened, if the user does not set a lock screen or cancels previous lock screen settings, the terminal enters an application interface, and the respective application programs in the terminal need to receive the notification information broadcast by the operating system and trigger a series of application services according to the received notification information. At this time, the notification information broadcast by the operating system is directly sent to the respective application programs instead of being intercepted.

It can be seen from the above embodiments that, after the screen of the terminal is brightened, the notification information is intercepted if the terminal enters into the lock screen interface, and the notification information is not intercepted if the terminal does not enter into the lock screen interface. Thus, the flexibility for delaying information broadcasting is enhanced, and the power consumption is also reduced.

After step 130, the method may further include storing the intercepted notification information in a buffer.

Correspondingly, after storing the intercepted notification information in the buffer, step 140 may include: when the switching from the lock screen interface into an interface after unlocking is detected, sending the notification information stored in the buffer to the respective application programs.

Correspondingly, after storing the intercepted notification information in the buffer, when the switching from the lock screen interface into the interface after unlocking is not detected within a preset time, the notification information stored in the buffer is deleted.

In embodiments of the present disclosure, the switching from the lock screen interface into the interface after unlocking may not be detected within the preset time. There are many reasons for this case. For example, the user may forget the password for unlocking the screen, and thereby the user cannot successfully unlock the screen for a long time. As another example, the user does not want to unlock the screen and thereby the screen is turned off in short time. As a result, it is needed to set a time period, and if the preset time period expires, the notification information stored in the buffer is deleted.

It can be seen from the above embodiment that the terminal can store the intercepted notification information in a buffer, and delete the stored notification information in the buffer when switching from the lock screen interface into an interface after unlocking is not detected within a preset time. Thus, resource wastes because a user brightens the screen many times but does not unlock the screen can be avoided.

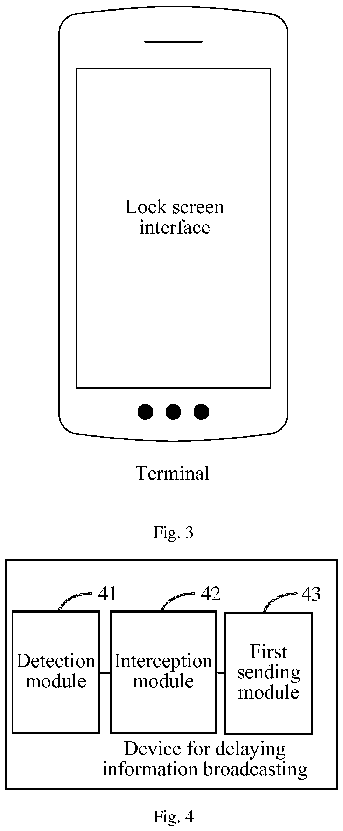

Fig. 3 is schematic diagram showing an application scenario of a method for delaying information broadcasting according to an exemplary embodiment of the present disclosure. There is a terminal, which sets a lock screen, in the application scenario.

The terminal may perform the following steps:
detecting a screen-brightening operation for brightening a screen of the terminal by a user;
when the screen-brightening operation is detected, and the screen of the terminal is in a screen-brightening state, intercepting notification information broadcast by an operating system; and
when switching from the lock screen interface into an interface after unlocking is detected, sending the intercepted notification information to respective application programs. Corresponding to the above embodiments of the method for delaying information broadcasting, the present disclosure further provides embodiments of the device for delaying information broadcasting.

Fig. 4 is a block diagram showing a device for delaying information broadcasting according to an exemplary embodiment of the present disclosure. The device is applied in a terminal and configured to perform the methods for delaying information broadcasting as shown in Figs. 1 and 2. The device may include a detection module 41, an interception module 42 and a first sending module 43.

The detection module 41 is configured to detect a screen-brightening event.

The interception module 42 is configured to, when the screen-brightening event is detected by the detection module 41, and a current interface is a lock screen interface, intercept notification information broadcast by an operating system. The notification information broadcast by the operating system may include a screen-brightening notification.

The first sending module 43 is configured to, when switching from the lock screen interface into an interface after unlocking is detected, send the intercepted notification information to respective application programs.

It can be seen from the above embodiments that, a terminal detects a screen-brightening event; when the screen-brightening event is detected, and a current interface is a lock screen interface, the terminal intercepts notification information broadcast by an operating system; and when switching from the lock screen interface into an interface after unlocking is detected, the terminal sends the intercepted notification information to respective application programs. In this way, when the terminal is in the lock screen state, the terminal postpones the sending of the broadcast information, and thereby running of services of respective application programs triggered by the broadcast information when the terminal is in the screen lock state is avoided. Thus, the broadcast information can trigger running of services only after the terminal is unlocked, and thereby the power consumption is optimized.

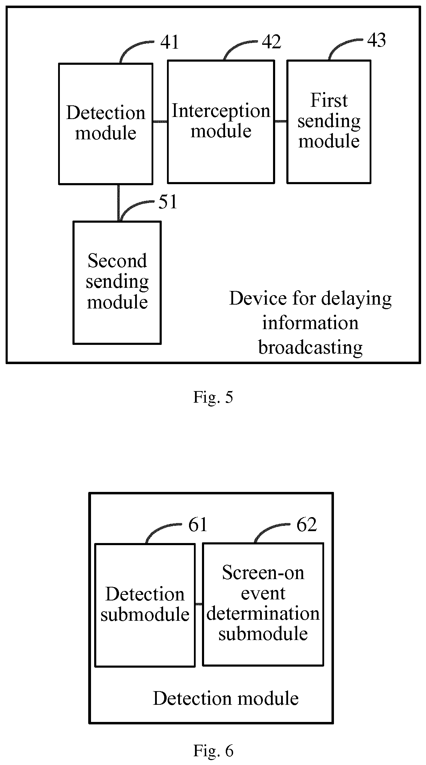

Fig. 5 is a block diagram showing another device for delaying information broadcasting according to an exemplary embodiment of the present disclosure. The terminal is applied in a terminal. On the basis of the device as shown in Fig. 4, the device in Fig. 5 may further include a second sending module 51.

The second sending module 51 is configured to, when the screen-brightening event is detected by the detection module 41 and the current interface is not the lock screen interface, send the notification information broadcast by the operating system to the respective application programs.

It can be seen from the above embodiments that after the screen of the terminal is brightened, if the terminal is in a lock screen interface, the notification information is intercepted, and if the terminal is not in the lock screen interface, the notification information is not intercepted. Thus, the flexibility for delaying information broadcasting is enhanced and the power consumption of the terminal is reduced.

Fig. 6 is a block diagram showing another device for delaying information broadcasting according to an exemplary embodiment of the present disclosure. The device is applied in a terminal. On the basis of the device as shown in Fig. 4, the detection module 41 in Fig. 6 may include a detection submodule 61 and a screen-brightening event determination submodule 62.

The detection submodule 61 is configured to detect a screen-brightening operation for brightening a screen of the terminal by a user.

The screen-brightening event determination submodule 62 is configured to, when the screen-brightening operation is detected, and the screen of the terminal is in a screen-brightening state, determine the screen-brightening operation as the screen-brightening event.

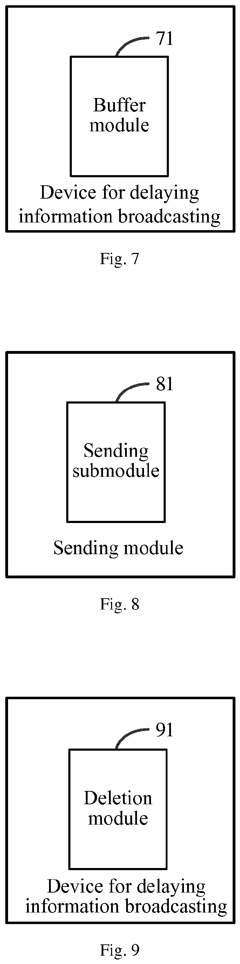

Fig. 7 is a block diagram showing another device for delaying information broadcasting according to an exemplary embodiment of the present disclosure. The device is applied in a terminal. On the basis of the device as shown in Fig. 4, the device in Fig. 7 may further include a buffer module 71.

The buffer module 71 is configured to, after the notification information broadcast by the operating system is intercepted, store the intercepted notification information in a buffer.

Fig. 8 is a block diagram showing another device for delaying information broadcasting according to an exemplary embodiment of the present disclosure. The device is applied in a terminal. On the basis of the device as shown in Fig. 7, the sending module 43 in Fig. 8 may further include a sending submodule 81.

The sending submodule 81 is configured to, when the switching from the lock screen interface into the interface after unlocking is detected, send the notification information stored in the buffer to the respective application programs.

Fig. 9 is a block diagram showing another device for delaying information broadcasting according to an exemplary embodiment of the present disclosure. The device is applied in a terminal. On the basis of the device as shown in Fig. 7, the device as shown in Fig. 9 may further include a deletion module 91.

The deletion module 91 is configured to, when the switching from the lock screen interface into the interface after unlocking is not detected within a preset time, delete the notification information stored in the buffer.

It can be seen from the above embodiments that the terminal can store the intercepted notification information in a buffer, and delete the stored notification information in the buffer when switching from the lock screen interface into an interface after unlocking is not detected within a preset time. Thus, resource wastes because a user brightens the screen many times but does not unlock the screen can be avoided.

Corresponding to Fig. 4, the present disclosure further provides another device for delaying information broadcasting. The device is applied in a terminal and includes:
a processor; and
a memory for storing instructions executable by the processor;
wherein the processor is configured to:
   detect a screen-brightening event;
   when the screen-brightening event is detected, and a current interface is a lock screen interface, intercept notification information broadcast by an operating system; and when switching from the lock screen interface into an interface after unlocking is detected, send the intercepted notification information to respective application programs.

With respect to the devices in the above embodiments, the specific manners for performing operations for individual units therein have been described in detail in the embodiments regarding the methods for delaying information broadcasting, which will not be elaborated herein.

The embodiments of devices basically correspond to the embodiments of methods, and thus for related portions, the description about the embodiments of methods may be referred to. The above described embodiments of devices are only illustrative, and portions described as separated units may be or may not be physically separated, and the portions shown as respective units may be or may not be physical modules, i.e., the portions may be located at one place, or may be distributed over a plurality of network units. A part or whole of the modules may be selected to realize the objectives of the technical solutions of the present disclosure according to actual requirements. One of ordinary skill in this art may understand and practice the technical solutions of the present disclosure without creative work.

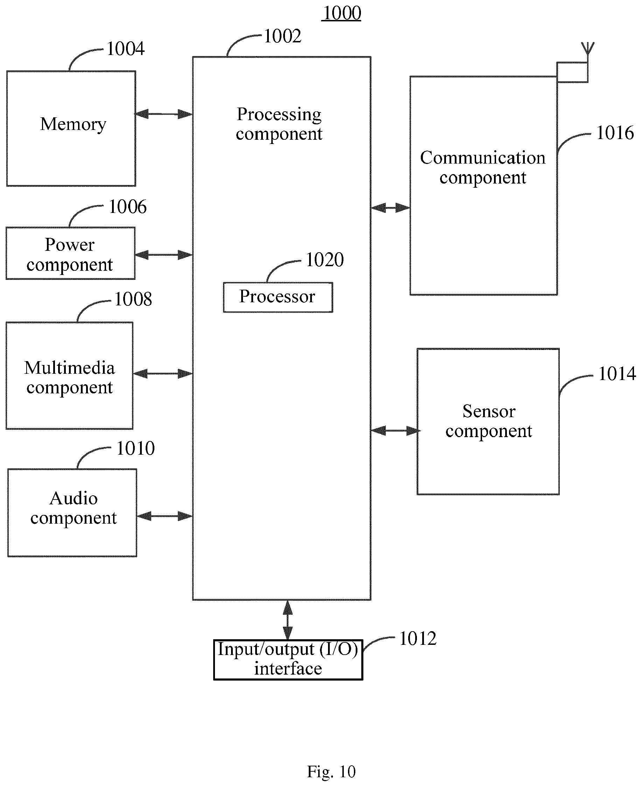

Fig. 10 is block diagram showing a structure applicable in a device 1000 for delaying information broadcasting (a terminal-side device) according to an exemplary embodiment of the present disclosure. For example, the device 1000 may be a mobile phone having a routing function, a computer, a digital broadcast terminal, a messaging device, a gaming console, a tablet, a medical device, exercise equipment, a personal digital assistant, and the like Referring to Fig. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the electronic device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal may be further stored in the memory 1004 or transmitted via the communication component 1016.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1004, executable by the processor 1020 in the device 1000, for performing the above-described methods. For example, the non-transitory computer-readable storage medium may be a ROM, a RAM, a CD-ROM, a magnetic tape, a floppy disc, an optical data storage device, and the like.

## Claims

1. A method for delaying information broadcasting, applied in a terminal and comprising:
detecting (110, 210), by the terminal, a screen-brightening event, wherein the screen-brightening event is a user indicated screen-brightening operation for brightening a screen of the terminal;
when the screen-brightening event is detected, and a current interface of the terminal is a lock screen interface, intercepting (120), by the terminal, notification information broadcast by an operating system of the terminal such that services of respective application programs running on the terminal are not triggered by the notification information broadcast during a time period between the screen-brightening event and subsequent unlocking of the lock screen and storing the intercepted notification information in a buffer of the terminal; and
upon detecting unlocking of the lock screen interface, switching, by the terminal, from the lock screen interface into an interface after unlocking and sending (130), by the terminal, the intercepted notification information stored in the buffer of the terminal to the respective application programs such that the broadcast information can trigger running of services of the respective application programs only after the terminal is unlocked.

2. The method according to claim 1, further comprising:
when the screen-brightening event is detected and the current interface is not the lock screen interface, sending the notification information broadcast by the operating system to the respective application programs.

3. The method according to claim 1 or 2, wherein the detecting the screen-brightening event comprises:
detecting a screen-brightening operation for brightening a screen of the terminal by a user; and
when the screen-brightening operation is detected, and the screen of the terminal is in a screen-brightening state, determining the screen-brightening operation as the screen-brightening event.

4. The method according to any one of the preceding claims, wherein the notification information comprises a screen-brightening notification.

5. The method according to any one of the preceding claims, wherein after intercepting the notification information broadcast by the operating system, the method further comprises:
storing the intercepted notification information in a buffer.

6. The method according to claim 5, wherein when switching from the lock screen interface into the interface after unlocking is detected, sending the intercepted notification information to respective application programs, comprises:
when the switching from the lock screen interface into the interface after unlocking is detected, sending (250) the notification information stored in the buffer to the respective application programs.

7. The method according to claim 5, further comprising:
when the switching from the lock screen interface into the interface after unlocking is not detected within a preset time, deleting the notification information stored in the buffer.

8. A device for delaying information broadcasting, applied in a terminal and comprising:
a detection module (41) configured to detect a screen-brightening event, wherein the screen-brightening event is a user indicated screen-brightening operation for brightening a screen of the terminal;
an interception module (42) configured to, when the screen-brightening event is detected by the detection module, and a current interface of the terminal is a lock screen interface, intercept notification information broadcast by an operating system such that services of respective application programs running on the terminal are not triggered by the notification information broadcast during a time period between the screen-brightening event and subsequent unlocking of the lock screen and store the intercepted notification information in a buffer of the terminal; and
a first sending module (43) configured to, upon detecting unlocking of the lock screen interface, switch from the lock screen interface into an interface after unlocking and send the intercepted notification information stored in the buffer of the terminal to the respective application programs such that the broadcast information can trigger running of services of the respective application programs only after the terminal is unlocked.

9. The device according to claim 8, further comprising:
a second sending module (51) configured to, when the screen-brightening event is detected by the detection module and the current interface is not the lock screen interface, send the notification information broadcast by the operating system to the respective application programs.

10. The device according to claim 8 or 9, wherein the detection module comprises:
a detection submodule (61) configured to detect a screen-brightening operation for brightening a screen of the terminal by a user; and
a screen-brightening event determination submodule (62) configured to, when the screen-brightening operation is detected, and the screen of the terminal is in a screen-brightening state, determine the screen-brightening operation as the screen-brightening event.

11. The device according to any one of claims 8 - 10, wherein the notification information comprises a screen-brightening notification.

12. The device according to any one of claims 8 - 11, further comprising:
a buffer module (71) configured to, after the notification information broadcast by the operating system is intercepted, store the intercepted notification information in a buffer.

13. The device according to claim 12, wherein the sending module (43) comprises:
a sending submodule (81) configured to, when the switching from the lock screen interface into the interface after unlocking is detected, send the notification information stored in the buffer to the respective application programs.

14. The device according to claim 12, further comprising:
a deletion module (91) configured to, when the switching from the lock screen interface into the interface after unlocking is not detected within a preset time, delete the notification information stored in the buffer.

15. A computer program, which when executing on a processor, performs a method according to any one of claims 1 to 7.

## Patentansprüche

1. Verfahren zum Verzögern von Informationsübertragungen, das in einem Terminal angewendet wird und folgendes umfasst:
Erfassen (110, 210), von dem Terminal, eines Bildschirmaufhellungsereignisses, wobei das Bildschirmaufhellungsereignis ein von einem Benutzer angegebener Bildschirmaufhellungsvorgang zum Aufhellen eines Bildschirmterminals ist;
wenn das Bildschirmaufhellungsereignis erfasst wird, und eine aktuelle Schnittstelle eine Sperrbildschirmschnittstelle ist, Abfangen, durch das Terminal, von von einem Betriebssystem des Terminals übertragenen Benachrichtigungsinformationen (120), so dass Dienste entsprechender Anwendungsprogramme, die auf dem Terminal ausgeführt werden, nicht durch die während einer Zeitspanne zwischen dem Bildschirmaufhellungsereignis und einem anschließenden Entsperren des Sperrbildschirms übertragenen Benachrichtigungsinformationen ausgelöst werden, und Speichern der abgefangenen Benachrichtigungsinformationen in einem Puffer des Terminals; und
beim Erfassen des Entsperrens der Sperrbildschirmschnittstelle, Schalten, von dem Terminal, von der Sperrbildschirmschnittstelle zu einer Schnittstelle nach dem Entsperren und Senden, von dem Terminal, der abgefangenen Benachrichtigungsinformationen, die im Puffer des Terminals gespeichert sind, an die jeweiligen Anwendungsprogramme (130), so dass die übertragenen Informationen die Ausführung von Diensten der jeweiligen Anwendungsprogramme erst dann auslösen können, wenn das Terminal entsperrt ist.

2. Verfahren nach Anspruch 1, weiter umfassend:
wenn das Bildschirmaufhellungsereignis erfasst wird und die aktuelle Schnittstelle nicht die Sperrbildschirmschnittstelle ist, Senden der vom Betriebssystem übertragenen Benachrichtigungsinformationen an die jeweiligen Anwendungsprogramme.

3. Verfahren nach Anspruch 1 oder 2, wobei das Erfassen des Bildschirmaufhellungsereignisses umfasst:
Erfassen eines Bildschirmaufhellungsvorganges zur Aufhellung eines Bildschirms des Terminals durch einen Benutzer; und
wenn der Bildschirmaufhellungsvorgang erfasst wird und der Bildschirm des Terminals sich in einem Bildschirmaufhellungszustand befindet, Bestimmen des Bildschirmaufhellungsvorganges als das Bildschirmaufhellungsereignis.

4. Verfahren nach einem der vorhergehenden Ansprüche, wobei die Benachrichtigungsinformationen eine Bildschirmaufhellungsbenachrichtigung umfassen.

5. Verfahren gemäß einem der vorhergehenden Ansprüche, wobei das Verfahren nach dem Abfangen der vom Betriebssystem übertragenen Benachrichtigungsinformationen weiterhin folgendes umfasst:
Speichern der abgefangenen Benachrichtigungsinformationen in einem Puffer.

6. Verfahren nach Anspruch 5, wobei das Senden der abgefangenen Benachrichtigungsinformation an entsprechende Anwendungsprogramme im Falle des Schaltens von der Sperrbildschirmschnittstelle in die Schnittstelle nach dem Erfassen eines Entsperrens folgendes umfasst:
wenn das Schalten von der Sperrbildschirmschnittstelle in die Schnittstelle nach dem Entsperren erfasst wird, Senden (250) der im Puffer gespeicherten Benachrichtigungsinformationen an die jeweiligen Anwendungsprogramme.

7. Verfahren nach Anspruch 5, weiter umfassend:
wenn das Schalten von der Sperrbildschirmschnittstelle in die Schnittstelle nach dem Entsperren nicht innerhalb einer voreingestellten Zeit erfasst wird, Löschen der im Puffer gespeicherten Benachrichtigungsinformationen.

8. Vorrichtung zur Verzögerung von Informationsübertragungen, die in einem Terminal angewendet wird und folgendes aufweist:
ein Erfassungsmodul (41), das so konfiguriert ist, dass es ein Bildschirmaufhellungsereignis erfasst, wobei das Bildschirmaufhellungsereignis ein vom Benutzer angegebener Bildschirmaufhellungsvorgang zum Aufhellen eines Bildschirmterminals ist;
ein Abfangmodul (42), das so konfiguriert ist, dass es, wenn das Bildschirmaufhellungsereignis durch das Erfassungsmodul erfasst wird und eine aktuelle Schnittstelle des Terminals eine Sperrbildschirmschnittstelle ist, von einem Betriebssystem gesendete Benachrichtigungsinformationen abfängt, so dass Dienste jeweiliger Anwendungsprogramme, die auf dem Terminal ausgeführt werden, durch die während einer Zeitspanne zwischen dem Bildschirmaufhellungsereignis und einem anschließenden Entsperren des Sperrbildschirms gesendeten Benachrichtigungsinformationen nicht ausgelöst werden, und die abgefangenen Benachrichtigungsinformationen in einem Puffer des Terminals speichert; und
ein erstes Sendemodul (43), das so konfiguriert ist, dass es bei Erfassen eines Entsperrens der Sperrbildschirmschnittstelle von der Sperrbildschirmschnittstelle zu einer Schnittstelle nach dem Entsperren umschaltet und die in dem Puffer des Terminals gespeicherten abgefangenen Benachrichtigungsinformationen an die jeweiligen Anwendungsprogramme sendet, so dass die übertragenen Informationen das Ausführen von Diensten der jeweiligen Anwendungsprogramme erst dann auslösen können, wenn das Terminal entsperrt ist.

9. Vorrichtung nach Anspruch 8, die weiter folgendes aufweist:
ein zweites Sendemodul (51), das so konfiguriert ist, dass es, wenn das Bildschirmaufhellungsereignis vom Erfassungsmodul erfasst wird und die aktuelle Schnittstelle nicht die Sperrbildschirmschnittstelle ist, die vom Betriebssystem gesendeten Benachrichtigungsinformationen an die jeweiligen Anwendungsprogramme sendet.

10. Vorrichtung nach Anspruch 8 oder 9, wobei das Erfassungsmodul folgendes aufweist:
ein Erfassungs-Untermodul (61), das so konfiguriert ist, dass es einen Bildschirmaufhellungsvorgang zum Aufhellen eines Bildschirms des Terminals durch einen Benutzer erfasst; und
ein Bildschirmaufhellungsereignisbestimmungs-Untermodul (62), das so konfiguriert ist, dass es, wenn der Bildschirmaufhellungsvorgang erfasst wird und sich der Bildschirm des Terminals in einem Bildschirmaufhellungszustand befindet, den Bildschirmaufhellungsvorgang als das Bildschirmaufhellungsereignis bestimmt.

11. Vorrichtung nach einem der Ansprüche 8 - 10, wobei die Benachrichtigungsinformationen eine Bildschirmaufhellungsbenachrichtigung aufweisen.

12. Vorrichtung nach einem der Ansprüche 8 - 11, die weiter folgendes aufweist:
ein Puffermodul (71), das so konfiguriert ist, dass es, nachdem die vom Betriebssystem gesendeten Benachrichtigungsinformationen abgefangen wurden, die abgefangenen Benachrichtigungsinformationen in einem Puffer speichert.

13. Vorrichtung nach Anspruch 12, wobei das Sendemodul (43) folgendes aufweist:
ein Sende-Untermodul (81), das so konfiguriert ist, dass es, wenn das Schalten von der Sperrbildschirmschnittstelle in die Schnittstelle nach dem Entsperren erfasst wird, die in dem Puffer gespeicherten Benachrichtigungsinformationen an die jeweiligen Anwendungsprogramme sendet.

14. Vorrichtung nach Anspruch 12, die weiter folgendes aufweist:
ein Löschmodul (91), das so konfiguriert ist, dass es, wenn das Schalten von der Sperrbildschirmschnittstelle in die Schnittstelle nach dem Entsperren nicht innerhalb einer vorgegebenen Zeit erfasst wird, die in dem Puffer gespeicherten Benachrichtigungsinformationen löscht.

15. Computerprogramm, das bei der Ausführung auf einem Prozessor ein Verfahren nach einem der Ansprüche 1 bis 7 ausführt.

## Revendications

1. Un procédé pour retarder des transmissions d'informations, qui est appliquée dans un terminal et comprend:
détecter (110, 210), par le terminal, un événement d'éclaircissement de l'écran, dans lequel l'événement d'éclaircissement de l'écran est un processus d'éclaircissement de l'écran spécifié par l'utilisateur pour éclaircir un terminal d'affichage;
lorsque l'événement d'éclaircissement de l'écran est détecté et qu'une interface courante est une interface d'écran de verrouillage, intercepter, par le terminal, des informations de notification (120) transmises par un système d'exploitation du terminal de sorte que des services des programmes d'application correspondants fonctionnant sur le terminal ne soient pas déclenchés par les informations de notification transmises pendant une période de temps entre l'événement d'éclaircissement de l'écran et un déverrouillage ultérieur de l'écran de verrouillage, et stocker les informations de notification interceptées dans une mémoire tampon du terminal; et
lors de la détection du déverrouillage de l'interface de l'écran de verrouillage, actionner, par le terminal, de l'interface de l'écran de verrouillage à une interface après déverrouillage et envoyer, par le terminal, les informations de notification interceptées stockées dans la mémoire tampon du terminal aux programmes d'application respectifs (130) afin que les informations transmises puissent déclencher le fonctionnement des services des programmes d'application respectifs uniquement lorsque le terminal est déverrouillé.

2. Le procédé selon la revendication 1, qui comprend:
si l'événement d'éclaicissement de l'écran est détecté et que l'interface actuelle n'est pas l'interface de verrouillage de l'écran, envoyer les informations de notification transmises par le système d'exploitation aux programmes d'application respectifs.

3. Le procédé selon la revendication 1 ou 2, dans lequel détecter de l'événement d'éclaircissement de l'écran comprend:
détecter d'un processus d'éclaircissement de l'écran du terminal par un utilisateur; et
lorsque le processus d'éclaircissement de l'écran est détecté et que l'écran du terminal est dans un état d'éclaircissement de l'écran, déterminer le processus d'éclaircissement de l'écran comme l'événement d'éclaircissement de l'écran.

4. Le procédé selon l'une des revendications précédentes, dans lequel les informations de notification comprennent une notification d'éclaircissement d'écran.

5. Le procédé selon l'une des revendications précédentes, le procédé comprenant en outre, après l'interception des informations de notification transmises par le système d'exploitation:
stocker les informations de notification interceptées dans une mémoire tampon.

6. Le procédé selon la revendication 5, dans lequel envoyer des informations de notification interceptées aux programmes d'application correspondants en cas d' actionnement de l'interface de l'écran de verrouillage à l'interface après détection d'un déverrouillage comprend:
si lactionnement de l'interface de l'écran de verrouillage à l'interface après le déverrouillage est détecté, l'envoi (250) des informations de notification stockées dans la mémoire tampon aux programmes d'application respectifs.

7. Le procédé selon la revendication 5, qui comprend :
si l'actionnement de l'interface de l'écran de verrouillage à l'interface après le déverrouillage n'est pas détecté dans un délai prédéfini, supprimer les informations de notification stockées dans la mémoire tampon.

8. Un dispositif pour retarder la transmission d'informations appliqué dans un terminal, comprenant:
un module de détection (41) configuré pour détecter un événement d'éclaircissement d'écran, dans lequel l'événement d'éclaircissement d'écran est un processus d'éclaircissement d'écran spécifié par l'utilisateur pour éclaircir un terminal d'affichage;
un module d'interception (42) configuré pour intercepter, lorsque l'événement d'éclaircissement de l'écran est détecté par le module de détection et qu'une interface courante du terminal est une interface de verrouillage de l'écran, les informations de notification transmises par un système d'exploitation afin que les services des programmes d'application respectifs, fonctionnant sur le terminal, qui ne déclenche pas les informations de notification envoyées pendant une période de temps entre l'événement d'éclaircissement de l'écran et un déverrouillage ultérieur de l'écran de verrouillage, et stocke les informations de notification interceptées dans une mémoire tampon du terminal; et
un premier module d'envoi (43) configuré pour actionner de l'interface de l'écran de verrouillage à une interface après déverrouillage dès la détection du déverrouillage de l'interface de l'écran de verrouillage, et pour envoyer les informations de notification interceptées stockées dans la mémoire tampon du terminal aux programmes d'application respectifs de sorte que les informations transmises puissent déclencher le fonctionnement des services des programmes d'application respectifs uniquement après le déverrouillage du terminal.

9. Le dispositif selon la revendication 8, qui comprend en outre ce qui suit:
un deuxième module d'envoi (51) configuré, lorsque l'événement d'éclaircissement de l'écran est détecté par le module de détection et que l'interface courante n'est pas l'interface de verrouillage de l'écran, pour envoyer les informations de notification transmises par le système d'exploitation aux programmes d'application respectifs.

10. Le dispositif selon la revendication 8 ou 9, dans lequel le module de détection comprend:
un sous-module de détection (61) configuré pour détecter un processus d'éclaircissement d'écran pour éclaircir un écran du terminal par un utilisateur; et
un sous-module de détermination de l'événement d'éclaircissement de l'écran (62) configuré, lorsque le processus d'éclaircissement de l'écran est détecté et que l'écran du terminal est dans un état d'éclaircissement de l'écran, pour déterminer le processus d'éclaircissement de l'écran comme l'événement d'éclaircissement de l'écran.

11. Le dispositif selon l'une des revendications 8-10, dans lequel les informations de notification comprennent une notification d'éclaircissement de l'écran.

12. Le dispositif selon l'une des revendications 8 à 11, comprenant en outre
un module tampon (71) configuré, après que les informations de notification transmises par le système d'exploitation ont été interceptées, pour stocker les informations de notification interceptées dans une mémoire tampon.

13. Le dispositif selon la revendication 12, dans lequel le module d'envoi (43) comprend
un sous-module d'envoi (81) configuré, lors d'actionnement de l'interface de l'écran de verrouillage à l'interface après la détection du déverrouillage, pour envoyer les informations de notification stockées dans la mémoire tampon aux programmes d'application respectifs.

14. Le dispositif selon la revendication 12 comprenant en outre:
un module de suppression (91) configuré pour supprimer les informations de notification stockées dans la mémoire tampon si l'actionnement de l'interface de l'écran de verrouillage à l'interface après le déverrouillage n'est pas détecté dans un délai prédéterminé.

15. Un programme informatique qui, lorsqu'il est exécuté sur un processeur, exécute un procédé selon l'une des revendications 1 à 7.
